# EUROPEAN PATENT APPLICATION

(11) **EP 3 040 593 A1**
(43) Date of publication of application: **06.07.2016**
(21) Application number: 14839563.5
(22) Date of filing: 14.08.2014
(51) Int. Cl.: F16L 33/01

(54) **SEALING ASSEMBLY FOR HOSE CONNECTOR**

(30) Priority: 26.08.2013 BR 102013021702
(71) Applicant: Símeros Projetos Eletromecânicos Ltda., 91530-290 Porto Alegre - RS (BR)
(72) Inventor: BERTONI, Fabiano, CEP: 90620-010 Porto Alegre - RS (BR); SEBASTIAN LÓPEZ, Facundo, CEP: 90010-313 Porto Alegre - RS (BR)
(74) Representative: Nuss, Laurent
(86) International application number: PCT/BR2014/000281
(87) International publication number: WO 2015/027304

(57) **Abstract**

**"SEAL SET FOR FLEXIBLE DUCT CONNECTOR".** This invention proposes a seal assembly (70, 80) for connector (10) of flexible duct (50), comprising an activation flange (71, 81) having a contact area acting against an activation area in a seal means, due to tightening of screws (74, 84) so as to press such seal means against a support area. According to the invention, the seal assembly (70, 80) comprises a support flange (73, 83) in which is such support zone. Thus, in case of need of an adjustment machining in the support area to assemble a seal assembly (70, 80), the part to be machined is the support flange (73, 83).

## Description

The invention refers to a seal set for flexible duct connector, such flexible duct used to transport fluids in offshore oil and gas extraction systems. A connector (end-fitting) of flexible duct is provided with an internal seal set, responsible for internal tightness of the flexible duct, and an external seal set, responsible for external tightness of the flexible duct. From a connector it is possible to connect a flexible duct to an adjacent element, such as another flexible duct segment, a manifold station, or an oil and gas extraction ship or platform.

In the offshore oil extraction area, collection of the oil and gas extracted from the seabed wells is through horizontal ducts (flowlines) generally static, and from predominantly vertical ducts (risers) responsible for the connection between the horizontal ducts and oil extraction platform or ship. The vertical ducts can be rigid or flexible.

Notably, the flexible ducts (flexible risers) used for this purpose are exposed to different weather from the environment in which they are. The strong currents and the seawater itself require the flexible ducts to be prepared for all the adversities imposed on them. For this purpose, state-of-the-art flexible ducts made with several layers of different materials and shapes are already foreseen.

Due to the complexity of manufacturing the flexible ducts and the size of the traction armature wire coil used in this process, segments of flexible ducts of approximately 1000 meters long along an oil collecting line are used. Thus, in order to reach the required length of the collecting line according to its application, connectors are installed at the ends of each segment of flexible duct, in order to make the connection between the different segments of flexible ducts. Furthermore, the connectors are used to connect the end of a flexible duct to a manifold station or an oil extraction ship or platform.

The connectors are responsible for supporting, accommodating and securing all layers of the flexible duct, maintaining its internal and external tightness. More particularly, a connector for a flexible duct, as disclosed in PI1100148-8, comprises an external envelope in a tubular form, provided with a front end and a rear end; one conventional external seal set, cooperating with the rear end of the external envelope and an external seal polymeric layer of the flexible duct, so as to seal against the external environment to such flexible duct; a closing flange fixed to the front end of the external envelope and joined to a connecting flange; and a conventional internal seal set, cooperating with the closing flange and an internal seal polymeric layer of the flexible duct, in order to seal against the internal environment to such flexible duct.

Both conventional seal sets used in this flexible duct connector comprise an activation flange acting against a seal means, due to tightening through screws, so as to press such seal means against a support area. More particularly, the seal means comprises a wedge shaped seal ring.

In the case of a conventional external seal set, the support area is defined by a wedge-shaped recess located on the rear end of the external envelope. In the case of a conventional internal seal set, the support area is defined by a wedge-shaped recess located on the closing flange.

Often, a polymeric seal layer of a flexible duct has excessive dimensional variations or form deviations, such as ovality. The assembly of a conventional seal set under these circumstances has inconveniences. More particularly, in order to adapt to these polymeric seal layer variations, it is often necessary to perform adjustment machining on the wedge-shaped recess. In the case of a conventional external seal set, the part to be machined is the external envelope, and in the case of a conventional internal seal set, the part to be machined is the closing flange. Notably, both the external envelope and the closing flange are large and therefore heavy parts. Thus, the task of handling these parts to perform machining is extremely costly and it is therefore necessary to have a cargo movement element, such as a crane or hoist. Still, this inconvenience becomes pronounced when considering the assembly of a connector on a flexible duct performed at sea, in a ship or an oil platform, where there are known physical space limitations.

Intending to eliminate these inconveniences, this invention proposes a seal set for flexible duct connector, comprising an activation flange provided with a contact area acting against an activation area present in a seal means, due to tightening through screw, so as to press such seal means against the support area. According to the invention, the seal set comprises a supporting flange in which such support area is located.

Thus, in case of needing adjustment machining in the support area to assemble a seal set, the part to be machined consists of the support flange. In the case of an external seal set, the part to be machined becomes a support flange, regardless of the external envelope, and in the case of an internal seal set, the part to be machined becomes a support flange, regardless of the closing flange. Notably, the support flange is a smaller part compared to the external envelope or closing flange and thus, can advantageously be moved easier for machining. Thus, advantageously, the seal set proposed herein can more easily be adapted to the dimensional variations or deviations in form of a polymeric seal layer of a flexible duct.

The invention will be better understood with the following detailed description, which will be better interpreted with the figures, as follows:
Figure 1 shows a longitudinal sectional view of a connector (10) comprising a conventional external seal set (70') and a conventional internal seal set (80'), state-of-the-art, assembled on a flexible duct (50).
Figure 2 shows a longitudinal section view of a first connector model (10) comprising an external seal set (70) and an internal seal set (80) according to an invention incorporation, assembled on a flexible duct (50).
Figure 3 shows an enlarged view of region "A" shown in Figure 2.
Figure 4 shows an enlarged view of region "B" shown in Figure 2.
Figure 5 shows an enlarged view of a region equivalent to region "A" shown in Figure 2, but with the internal seal set (80) configured according to another invention incorporation.
Figure 6 shows an enlarged view of a region equivalent to region "B" shown in Figure 2, but with the external seal set (70) configured according to another invention incorporation.
Figure 7 shows a longitudinal sectional view of a second connector model (10) comprising an external seal set (70) and an internal seal set (80) according to an invention incorporation, assembled on a flexible duct (50).
Figure 8 shows a longitudinal sectional view of a third connector model (10) comprising an external seal set (70) and an internal seal set (80) according to an invention incorporation, assembled on a flexible duct (50).

The following detailed description is made based on a flexible duct (50) having six layers, as provided by the state-of-the-art. However, it will be evident that the invention proposed herein not only configures a six-layer flexible conductor (50), and may be applied to other flexible ducts with different numbers of layers, complying with the scope of the claims.

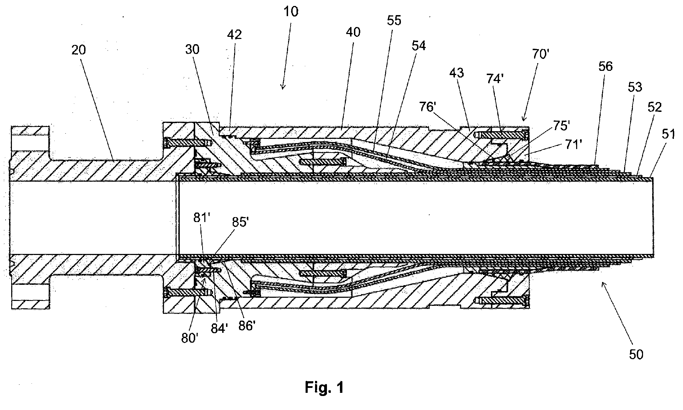

A flexible duct (50) with six overlapped layers, as can be seen in Figures 1, 2, 7 and 8 it comprises an internal housing (51), an internal seal polymer layer (52), a pressure armature (53), an internal traction armature (54), an external traction armature (55) and an external seal polymer layer (56).

A connector (10) for flexible duct (50), as disclosed in PI11 00148-8, and as can be seen in Figure 1, comprises an external envelope (40) tubular shape, provided with a front end (42) and a rear end (43); a conventional external seal set (70') cooperating with the rear end (43) of the external envelope (40) and with the external seal polymer layer (56) of the flexible duct (50), so as seal regarding the external environment to such flexible duct (50); a closing flange (30) fixed to the front end (42) of the external envelope (40) and associated with a connection flange (20); and a conventional internal seal set (80') cooperating with the closing flange (30) and with the internal seal polymer layer (52) of the flexible duct (50) so as to seal regarding the internal environment to such flexible duct (50).

Both conventional seal assemblies (70', 80') used in this connector (10) of flexible duct (50) comprises an activation plate (71', 81') acting against a seal means, due to tightening by screws (74', 84') so as to press such seal means against the support area. More particularly, the seal means comprises a wedge shaped seal ring (75', 85').

In the case of a conventional external seal set (70'), the support area is defined by a wedge-shaped recess (76') located at the rear end (43) of the external envelope (40). In the case of a conventional internal seal set (80'), the support area is defined by a wedge-shaped recess (86') located in the closing flange (30).

Often, a polymer seal layer (52, 56) of a flexible duct (50) has excessive dimensional variations or deviations in form, such as ovality. The assembly of a conventional seal set (70', 80') under these circumstances has inconveniences. More particularly, in order to adapt to these variations in the polymer seal layer (52, 56), it is often necessary to make a machining adjustment in the wedge-shaped recess (76', 86'). In the case of a conventional external seal set (70'), the part to be machined consists of the external envelope (40), and in the case of a conventional internal seal set (80'), the part to be machined consists of the closing flange (30). Notably, both the external envelope (40) and the closing flange (30) are large parts and therefore heavy. Thus, moving these parts for machining is extremely costly and therefore a cargo movement element is necessary, such as a crane or hoist. Still, this inconvenience becomes pronounced when considering that the assembly of a connector (10) in a flexible duct (50) may be performed at sea, on a ship or an oil platform, where there are known physical space limitations.

Intending to eliminate these inconveniences, this invention proposes a seal set (70, 80) for flexible duct (50) connector (10), comprising an activation flange (71, 81) provided with a contact area acting against an activation area present in a seal means, due to tightening of screws (74, 84), so as to press such seal means against the support area. According to the invention, the seal set (70, 80) comprises a supporting flange (73, 83) in which such support area is located.

Thus, in case of needing adjustment machining in the support area to assemble a seal set (70, 80), the part to be machined becomes a support flange (73, 83). In the case of an external seal set (70), the part to be machined becomes a support flange (73), regardless of the external envelope (40), and in the case of an internal seal set (80), the part to be machined becomes a support flange (83), regardless of the closing flange (30). Notably, the support flange (73, 83) is a smaller part compared to the external envelope (40) or the closing flange (30) and thus can advantageously be moved easier for machining. Thus, advantageously, the seal set (70, 80) proposed herein can more easily be adapted to the dimensional variations or deviations in form of a polymeric seal layer (52, 56) of a flexible duct (50).

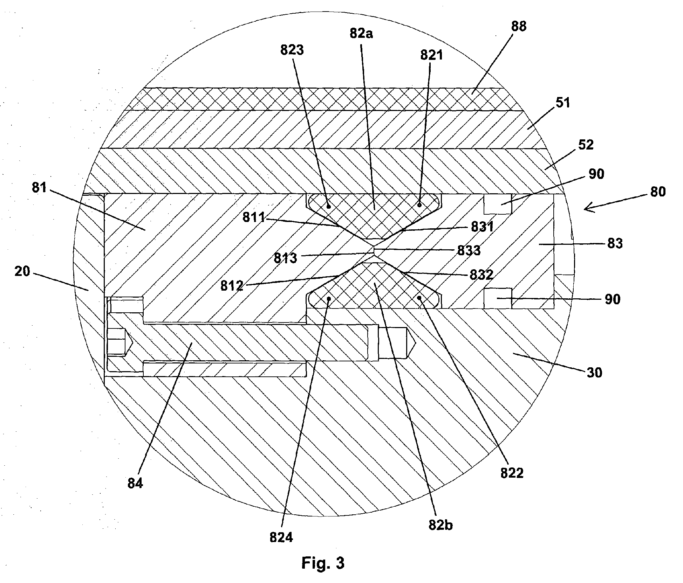

Preferably, as can be seen better in Figures 3 to 6, the seal means of a seal set (70, 80) comprises an internal wedge (721, 821) and an external wedge (722, 822), both pressed against the support area, such support area being defined by an internal wedge-shaped recess (731, 831) and an external wedge-shaped recess (732, 832). Advantageously, this case has a seal set (70, 80) of higher performance, since the internal wedge (721, 821) seals the passage of fluid between the polymer seal layer (56, 52) and support flange (73, 83) and the external wedge (722, 822) seals the passage of fluid between a part of the connector (10) and the support flange (73, 83). More particularly, in the case of an external seal set (70), the external wedge (722) seals the passage of fluid between the external envelope (40) and support flange (73), and in the case of an internal seal set (80), the external wedge (822) seals the passage of fluid between the closing flange (30) and support flange (83).

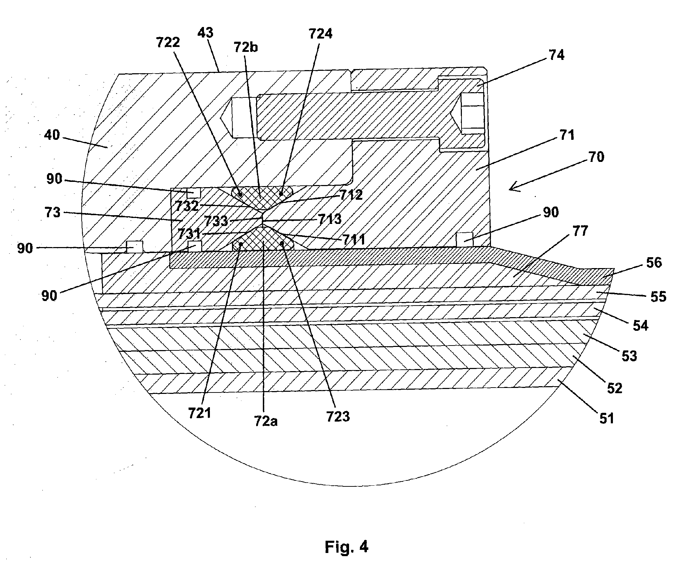

According to an incorporation of the invention, as can be seen better in Figures 3 and 4, the internal wedge (721, 821) may be present in an internal ring (72a, 82a), and the external wedge (722, 822) may be present in an external ring (72b, 82b), such internal ring (72a, 82a) and external ring (72b, 82b) being independent from each other. According to this incorporation, advantageously, the seal means has a greater capacity to adapt to dimensional variations or deviations in form of a polymer seal layer (52, 56) of a flexible duct (50). More particularly, the tightening of the screws (74, 84) causes an axial movement of the activation flange (71, 81), causing it to act against the seal means, so as to compress such seal means. The fact that the internal wedge (721, 821) is present in an internal ring (72a, 82a), and the external wedge (722, 822) is present in an external ring (72b, 82b), such internal ring (72a, 82a) and external ring (72b, 82b) are independent from each other, it allows for better accommodation of the internal wedge (721, 821) in the internal wedge-shaped recess (731, 831), regardless of the accommodation of the external wedge (722, 822) in the respective external wedge-shaped recess (732, 832), and vice versa.

The following description is made considering the incorporation in which the internal wedge (721, 821) is present in an internal ring (72a, 82a) and the external wedge (722, 822) is present in an external ring (72b , 82b), such internal ring (72a, 82a) and external ring (72b, 82b) are independent from each other, as can be better seen in Figures 3 and 4.

Preferably, as it can also be seen better in Figures 3 and 4, the activation area in the seal means is defined by an internal wedge (723, 823) and an external wedge (724, 824), and the activation flange contact area (71, 81) is defined by an internal wedge-shaped recess (711, 811) and an external wedge-shaped recess (712, 812), such internal recess (711, 811) acts against such internal wedge (723, 823) and such external recess (712, 812) acts against such external wedge (724, 824). According to this incorporation, advantageously, in case of a request of the polymer layer seal (52, 56) of the flexible duct (50) towards the activation flange (71, 81), the internal wedge (723, 823) and the external wedge (724, 824) tend to be more pressed, respectively against the internal wedge-shaped recess (711, 811) and against the external wedge-shaped recess (712, 812) of the activation flange (71, 81), increasing the sealing effect of the seal means. A request of a polymer layer (52, 56) of this type can occur under working conditions, since the flexible duct (50) is moved, among others, by the sea currents.

Preferably, as can be better seen in Figures 3 and 4 between an internal wedge-shaped recess (711, 811) and an external wedge-shaped recess (712, 812) of the activation flange (71, 81) there is a flat top (713, 813). Similarly, between an internal wedge-shaped recess (731, 831) and an external wedge-shaped recess (732, 832) of the support flange (73, 83) there is a flat top (733, 833). Preferably, as it can be seen in Figures 3 and 4, ended the assembly of the seal set (70, 80) the flat top (713, 813) of the activation flange (71, 81) is in face to face contact with the flat top (733, 833) of the support flange (73, 83). In other words, the flat top (733, 833) of the supporting flange (73, 83) acts as a stop for the movement of the activation flange (71, 81) performed by tightening the screws (74, 84). Advantageously, this feature prevents excessive tightening of the activation flange (71, 81) against the internal ring (72a, 82a) and against the external ring (72b, 82b), which could lead them to collapse. Alternatively, according to a not shown incorporation, ended the assembly of the seal set (70, 80), there is no contact between the flat top (713, 813) of the activation flange (71, 81) and the flat top (733, 833) the support flange (73, 83). In this case, movement limitation of the activation flange (71, 81) against the internal ring (72a, 82a) and against the external ring (72b, 82b) is imposed by the resistance to compression of such internal ring (72a, 82a) and external ring (72b, 82b) and by the control of the screw tightening torque (74, 84).

Alternatively, according to a not shown incorporation, the activation area in the seal means is defined by a flat surface and the contact area of the activation flange (71,81) is defined by a flat surface.

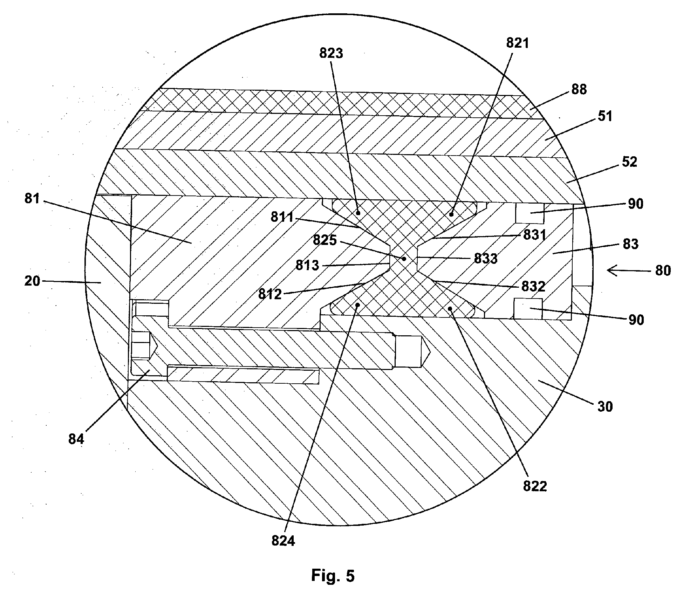

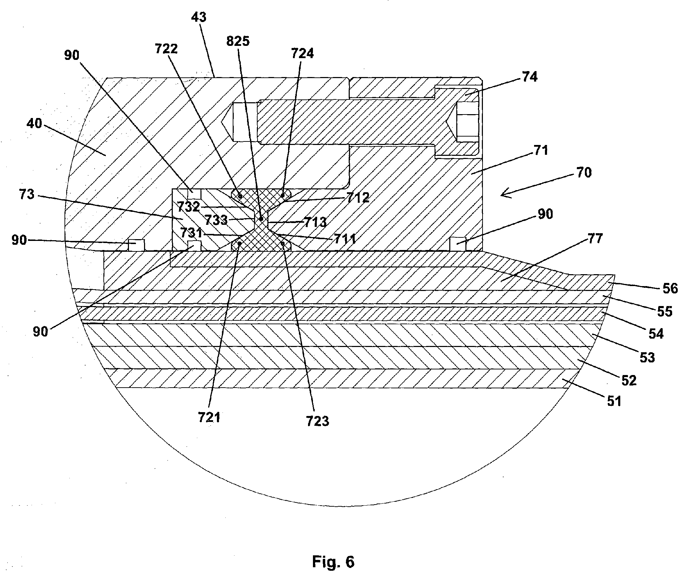

According to another incorporation of the invention, as it can be seen in Figures 5 and 6, the internal wedge (721, 821) and external wedge (722, 822) are configured in a single body. This incorporation represents an alternative to the incorporation where the internal wedge (721, 821) is present in an internal ring (72a, 82a), and the external wedge (722, 822) is present in an external ring (72b, 82b), such internal ring (72a, 82a) and external ring (72b, 82b) are independent from each other. In the case of the incorporation in which the internal wedge (721, 821) and external wedge (722, 822) are configured in a single body, advantageously, assembly of the seal means against the internal wedge-shaped recess (731, 831) and against the external wedge-shaped recess (732, 832) of the support flange (73, 83) is facilitated, since a single body is easier to be handled compared to two independent bodies. Moreover, advantageously, the fabrication of a seal means in a single body is facilitated, since the profile formed by the internal wedge (721, 821) and external wedge (722, 822) of the seal means can be obtained by a single machining operation, using a tool with the shape of the desired profile.

The following description is made considering the incorporation in which the internal wedge (721, 821) and the external wedge (722, 822) are configured in a single body, as it can be seen in Figures 5 and 6.

Preferably, as it can also be seen in Figures 5 and 6, this activation area in the seal means is defined by an internal wedge (723, 823) and an external wedge (724, 824), and the contact area of the activation flange (71, 81) is defined by an internal wedge-shaped recess (711, 811) and an external wedge-shaped recess (712, 812), such internal recess (711, 811) acts against such internal wedge (723, 823) and such external recess (712, 812) acts against such external wedge (724, 824). In other words, in this incorporation a neck (825) forms between the part of the seal means in which the internal wedges (821, 823) are, and the part of the seal means in which the external wedges (822, 824) are. According to this incorporation, advantageously, in case of a request of the polymer seal layer (52, 56) of the flexible duct (50) towards the activation flange (71, 81), the internal wedge (723, 823) and the external wedge (724, 824) tend to be more pressed, respectively, against the internal wedge-shaped recess (711, 811) and against the external wedge-shaped recess (712, 812) of the activation flange (71, 81), increasing the sealing effect of the seal means. A request of a polymer layer (52, 56) of this type can occur under working conditions, since the flexible duct (50) is moved, among others, by the sea currents.

Preferably, as it can be seen in Figures 5 and 6, between an internal wedge-shaped recess (711, 811) and an external wedge-shaped recess (712, 812) of the activation flange (71, 81) there is a flat top (713, 813). Similarly, between an internal wedge-shaped recess (731, 831) and an external wedge-shaped recess (732, 832) of the support flange (73, 83) there is a flat top (733, 833). Ended the assembly of the seal set (70, 80), as it can be seen in Figures 5 and 6, the flat top (713, 813) of the activation flange (71, 81) is in contact with a side of the neck (725, 825) and the flat top (733, 833) of the support flange (73, 83) is in contact with the other side of the neck (725, 825). In this case, movement limitation of the activation flange (71, 81) against the seal means in a single body is imposed by the resistance to compression of such seal means and by the control of the tightening torque of the screws (74, 84).

Alternatively, according to a not shown incorporation, the activation area in the seal means is defined by a flat surface and the contact area of the activation flange (71,81) is defined by a flat surface.

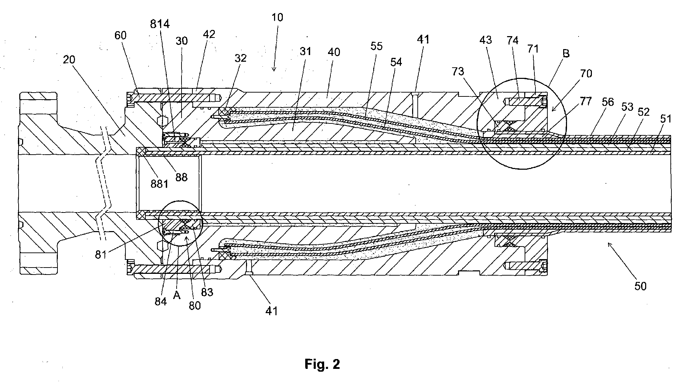

It must be understood that the external seal set (70) and/or the internal seal set (80) proposed herein may be used in different connector models (10) for flexible duct (50). Generally, a connector (10), as can be seen in Figures 2, 7 and 8, comprises an external envelope (40) in tubular shape, provided with a front end (42) and a rear end (43) and a closing flange (30) fixed to the front end (42) of the external envelope (40) and associated with a connection flange (20). The closing flange (30) is responsible for closing the front end (42) of the external envelope (40) and the connection flange (20) is responsible for providing the connector's connection (10) to an adjacent element, in which the flexible duct (50) must be connected.

Also, as it can be seen in Figures 2, 7 and 8, the external seal set (70), responsible for sealing against the external environment to the flexible duct (50) acts on the rear end (43) of the external envelope (40) and on the external polymer seal layer (56) of the flexible duct (50). In addition, an expansion ring (77) is positioned below the external polymer seal layer (56). The rear end (43) of the external envelope (40) receives the support flange (73), followed by the seal means covered by the activation flange (71) fixed to the rear end (43) of the external envelope (40) by means of screws (74). Additionally, the external seal set (70) may comprise one or more auxiliary O-ring type sealing rings (90).

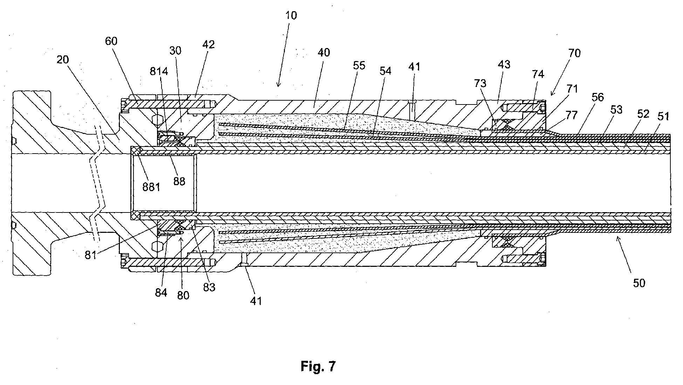

According to a connector model (10) for flexible duct (50), as it can be seen in Figures 2 and 7, the closing flange (30) and the connection flange (20) are independent elements, whereas the connection flange (20) fixed on the closing flange (30). Fastening the closing flange (30) at the front end (42) of the external envelope (40) and fastening the connection flange (20) on the closing flange (30) are performed by a set of screws (60) common to both elements (20, 30). Alternatively, according to a not shown incorporation, fastening the closing flange (30) at the front end (42) of the external envelope (40) is performed by a first set of screws and fastening the connection flange (20) on the closing flange (30) is performed by a second set of screws, independent from the first set of screws.

In the connector model (10) for flexible duct (50) shown in Figure 2, as disclosed in PI1100148-8, the closing flange (30) is provided with an extended part (31) that moves beneath the traction armatures (54, 55) of the flexible duct (50), whereas the ends of such traction armatures (54, 55) embedded in a support bracket (32) fixed in the closing flange (30). In the connector model (10) for flexible duct (50) shown in Figure 7, as proposed by the holder in BR 10 2013 017228-6, the closing flange (30) extends to a position substantially prior to the region contained below an internal traction armature (54) of the flexible duct (50). In both connector models (10), it can be seen in Figures 2 and 7, the closing flange (30) receives the internal seal set (80), acting on the internal polymer layer seal (52) sealing against the internal environment to the flexible duct (50). More particularly, the closing flange (30) receives the support flange (83), followed by a seal means covered by the activation flange (81) fixed on the closing flange (30) by screws (84). Alternatively, in both connector models (10), according to a not shown incorporation, the connection flange (20) may receive the internal seal set (80). Additionally, the internal seal set (80) may comprise one or more O-ring type sealing rings (90).

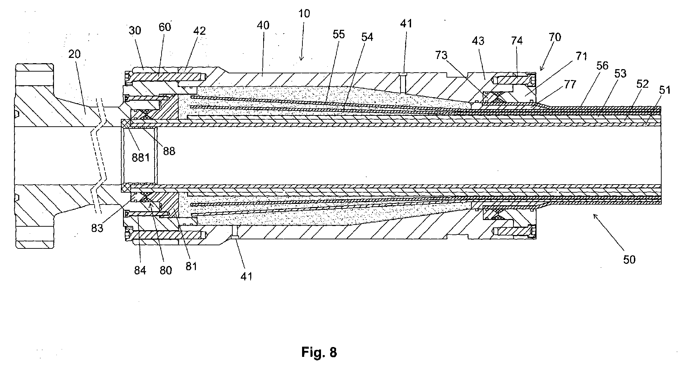

According to another connector model (10) for flexible duct (50), as it can be seen in Figure 8, and as proposed by the holder BR 10 2013 017228-6, the closing flange (30) and connection flange (20) are made in a single body. Fastening the closing flange (30) on the front end (42) of the external envelope (40) is performed by a set of screws (60). Further, the closing flange (30) extends to a position substantially prior to the region contained below an internal traction armature (54) of the flexible duct (50). The closing flange (30) receives the internal seal set (80). More particularly, the closing flange (30) receives the support flange (83), followed by seal means covered by the activation flange (81) fixed on the closing flange (30) by screws (84). Additionally, the internal seal set (80) may comprise one or more O-ring type sealing ring.

In addition, an activation flange (71, 81) may comprise at least one through hole (814) along its body. A through hole (814) of this type is used to introduce air pressure against the seal means after assembling a seal set (70, 80), with the intention to check if such seal set (70, 80) is operating properly. In Figures 2 and 7 it is possible to see an activation flange (81) of an internal seal set (80) comprising a through hole (814) along its body. Although not shown in the Figures, an activation flange (71) of an external seal set (70) may also comprise at least one through hole along its body, with the same purpose.

Preferably, an internal seal set (80) further comprises a support sleeve (88), of cylindrical body and anterior edge (881) extending radially outwardly, such support sleeve (88) being inserted internally to the free end of the internal housing (51) of the flexible duct (50) to a substantially posterior position to the position of the considered seal means, as it can be seen in Figures 2, 7 and 8. Advantageously, the support sleeve (88) provides a support for the region contained below the seal means of the internal seal set (80), avoiding a possible kneading of the internal polymer seal layer (52) and the internal housing (51) in the position below such seal means, when tightening the activation flange (81) against such seal means, which could lead to a significant loss of tightness.

In the represented incorporations, the connectors (10) comprise an external seal set (70) and an internal seal set (80) according to the invention. However, it must be understood that this invention proposes a seal set that can be used to internally seal regardless being equally used to externally seal, and vice versa. For example, it is possible to configure a connector (10) comprising an internal seal set (80) according to the invention, and a conventional external seal set (70'), as disclosed in PI1100148-8, or configure a connector (10) comprising an external seal set (70) according to the invention and a conventional internal seal set (80'), as disclosed in PI1100148-8.

As it can be seen in Figures 2, 7 and 8, the internal traction armature (54) and the external traction armature (55) are anchored in the connector (10) in the middle of an epoxy resin. The external envelope (40) is provided with at least two openings (41). During connector assembly (10) on the flexible duct (50), the epoxy resin is introduced through one of the openings (41) and the air is released through the other opening (41). In the incorporations shown, as it can be seen in Figures 2, 7 and 8, the tip of the traction armature (54, 55) has a straight profile. However, the tip of the traction armatures (54, 55) can present other anchoring profiles, such as a corrugated profile or a profile in the shape of "C", as referred to in the state-of-the-art.

Finally, the seal means described in this invention is not limited to a specific material and may for example be made of metal, such as steel or brass, or polymer, such as polyethylene, polyamide, polyurethane, natural rubber, or polyether ether ketone (PEEK).

The preferred incorporations or alternatives described herein do not have the power to limit the invention to the described structural shapes and there may be constructive variations that are equivalent without, however, escaping from the protection scope of the invention.

## Claims

1. **"SEAL SET FOR FLEXIBLE DUCT CONNECTOR",** comprising an activation flange (71, 81) having a contact area acting against an activation area in a seal means, due to tightening of screws (74, 84) so as to press such seal means against a support area, **characterized by** comprising a support flange (73, 83) in which such support area is located.

2. **"SEAL SET FOR FLEXIBLE DUCT CONNECTOR",** according to claim 1, **characterized by** the seal means comprising an internal wedge (721, 821) and an external wedge (722, 822), both pressed against the support area, such support area being defined by an internal wedge-shaped recess (731, 831) and an external wedge-shaped recess (732, 832).

3. **"SEAL SET FOR FLEXIBLE DUCT CONNECTOR",** according to claim 2, **characterized by** the internal wedge (721, 821) being present in an internal ring (72a, 82a) and by the external wedge (722, 822) being present in an external ring (72b, 82b), such internal ring (72a, 82a) and external ring (72b, 82b) being independent from each other.

4. **"SEAL SET FOR FLEXIBLE DUCT CONNECTOR",** according to claim 2, **characterized by** the internal wedge (721, 821) and external wedge (722, 822) being configured in a single body.

5. **"SEAL SET FOR FLEXIBLE DUCT CONNECTOR",** according to one of claims 1 to 4, **characterized by** the activation area in the seal means being defined by an internal wedge (723, 823) and an external wedge (724, 824) and by the contact area of the activation flange (71, 81) being defined by an internal wedge-shaped recess (711, 811) and an external wedge-shaped recess (712, 812), such internal recess (711, 811) acting against such internal wedge (723, 823) and such external recess (712, 812) acting against such outer wedge (724, 824).

6. **"SEAL SET FOR FLEXIBLE DUCT CONNECTOR",** according to one of claims 1 to 4, **characterized by** the activation area in the seal means being defined by a flat surface and the contact area of the activation flange (71,81) being defined by a flat surface.

7. **"SEAL SET FOR FLEXIBLE DUCT CONNECTOR",** according to one of claims 1 to 6, **characterized by** comprising a support sleeve (88), of cylindrical body and anterior edge (881) extending radially outwardly, such support sleeve (88) being inserted internally to the free end of an internal housing (51) of the flexible duct (50) to a substantially posterior position to the position of the regarded seal means.
